Europäisches Patentamt

European Patent Office

Office européen des brevets

(19)

(11) Publication number: **0 149 019**
**A2**

(12) # EUROPEAN PATENT APPLICATION

(21) Application number: **84112426.6**

(22) Date of filing: **15.10.84**

(51) Int. Cl.⁴: **G 05 G 1/04**
**//F16H5/04**

(30) Priority: **21.10.83 IT 6809283**

(43) Date of publication of application:
**24.07.85 Bulletin 85/30**

(84) Designated Contracting States:
**DE FR GB SE**

(71) Applicant: **IVECO FIAT S.p.A.**
**Via Puglia 35**
**I-10156 Torino(IT)**

(72) Inventor: **Pigozzi, Gian Maria**
**Via Bazoli, 19**
**I-25100 Brescia(IT)**

(72) Inventor: **Piazza, Romano**
**Via R. Bracco, 4**
**I-25100 Brescia(IT)**

(74) Representative: **Boggio, Luigi et al,**
**c/o Ingg. Carlo e Mario Torta Via Viotti, 9**
**I-10121 Torino(IT)**

(54) **Transmission gear shift and control device, particularly for industrial vehicles.**

(57) A device (10) is described for the selection and control of the gears in a gearbox of a vehicle, of the type in which a lever (1), actuable by the driver, acts, by means of a link (11), on the gear selector forks.

The link (11) is essentially constituted by a single fork actuating rod (3); such rod (3) is mounted rotatably and slidably in a longitudinal sense about its own axis of symmetry (a) and carries radially a coupling element (4). This latter cooperates with an arm (17) of the lever (1) and from it is able to receive forces in two perpendicular directions which cause, in the said rod (1), movements of translation or rotation about the said axis (a).

Fig.1

EP 0 149 019 A2

- 1 -

"Transmission gear shift and control device, particular
ly for industrial vehicles"

The present invention relates to a gear selection and
control device for the gears of a gearbox, particularly
for industrial vehicles.

Numerous selection and control devices for gearboxes are
known. Such devices comprise, essentially, a lever which
can be actuated by the driver to control the movement of
gear selection forks, each of which provides for the
engagement of the desired gear. In general, the control
lever can engage a gear by means of a linkage constituted essentially by several separate control rods, each
of which is provided for one or two gears and can be
actuated only when the other rods are securely in a
neutral position for the purpose of avoiding incorrect
operations. Known control links of the above specified
type are constituted by numerous individual parts, have
a less than compact structure, and are not easily actuated.

The object of the present invention is that of providing
a device which allows the selection and control of gears
in a simple manner, avoids erroneous operations and is
compact.

The said object is achieved by the present invention in
that it relates to a device for the selection and control
of gears in a vehicle gearbox, of a type in which a lever,
actuated by the driver, can act, by means of a linkage, on
the gear selector forks for the engagement of the gears,
characterised by the fact that the linkage is essentially

- 2 -

constituted by a single fork-actuating rod; the said rod being mounted rotatably and slidably in a longitudinal sense about its axis of symmetry and carrying radially a coupling element cooperating with an arm of the lever and from which it is able to receive forces in two perpendicular directions, which induce movements in the rod of translation or rotation with respect to the said axis.

For a better understanding of the present invention there is now described a preferred embodiment purely by way of non limitative example and with reference to the attached drawings, in which:

Figure 1 is a sectional side view of a device formed according to the present invention;
Figure 2 is a side view in elevation of Figure 1 with several details removed for clarity; and
Figures 3 and 4 are side views in elevation of the device in question, shown in a specific working position.

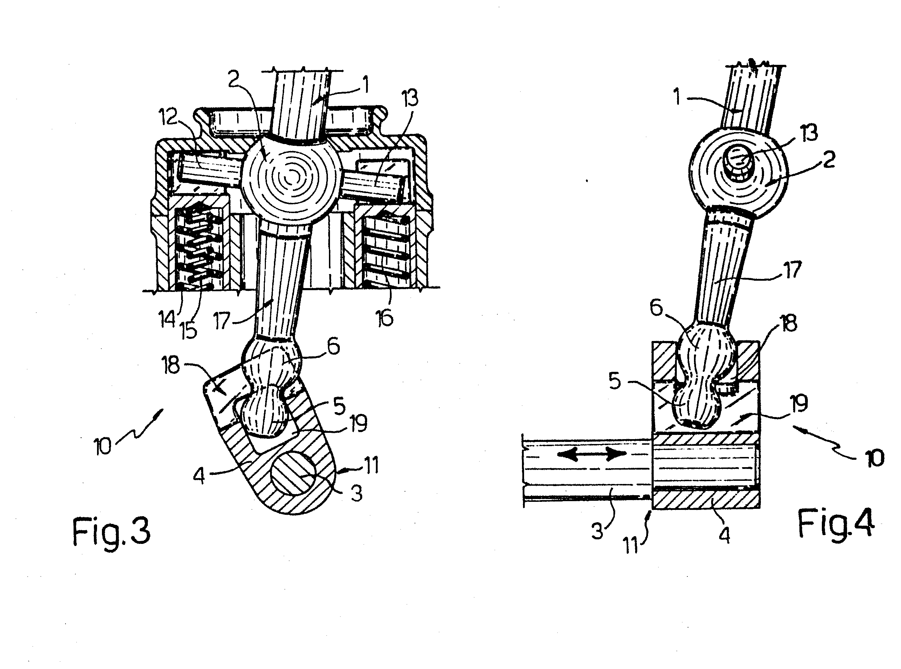

With reference to these Figures, a device for the selection and control of the gears of a gearbox (not illustrated) of a vehicle, particularly an industrial vehicle, is indicated generally with the reference numeral 10. The device 10 essentially comprises a lever 1 and a linkage 11. The lever 1 is rotatably mounted about an axis $b$ at a ball joint 2 having a pair of transverse arms 12,13 diametrically opposite one another and each of which is preloaded upwardly by means of a respective cylindrical spring (14,15 acting on the arm 11 and 16 acting on the arm 12).
The lever 1 further has an arm 17 an end portion of which terminates with a spherical enlargement 6 surmounted by

- 3 -

a spherical head 5 having a diameter slightly less than the enlargement itself. The enlargement 6 and the head 5 respectively engage seats 18,19 in a coupling element 4 forming part, together with the rod 3, of the said control link 11. In more detail, the seat 19 is essentially constituted by a through hole of rectangular section an axis of which is disposed parallel to an axis $a$ of the rod 3. The lever 1 is therefore able to transmit to the rod 3 the movement of rotation about the above mentioned axis $a$ by means of the head 5 (see Figure 3). The seat 18 on the other hand is essentially constituted by a groove extending in a perpendicular direction with respect to the axis $a$; this groove, by engaging with the enlargement 6, allows the lever 1 to transmit to the rod 3 a movement of translation along its axis $a$.

Conveniently, the effective lever arm $b_2$ between the ball joint 2 of the control lever 1 and the spherical enlargement 6 is chosen to be less than the effective lever arm $b_1$ between the ball joint 2 and the control head 5 in such a way that the force to be applied for the selection and control of the gears is substantially equal in each plane of control of the lever 1.

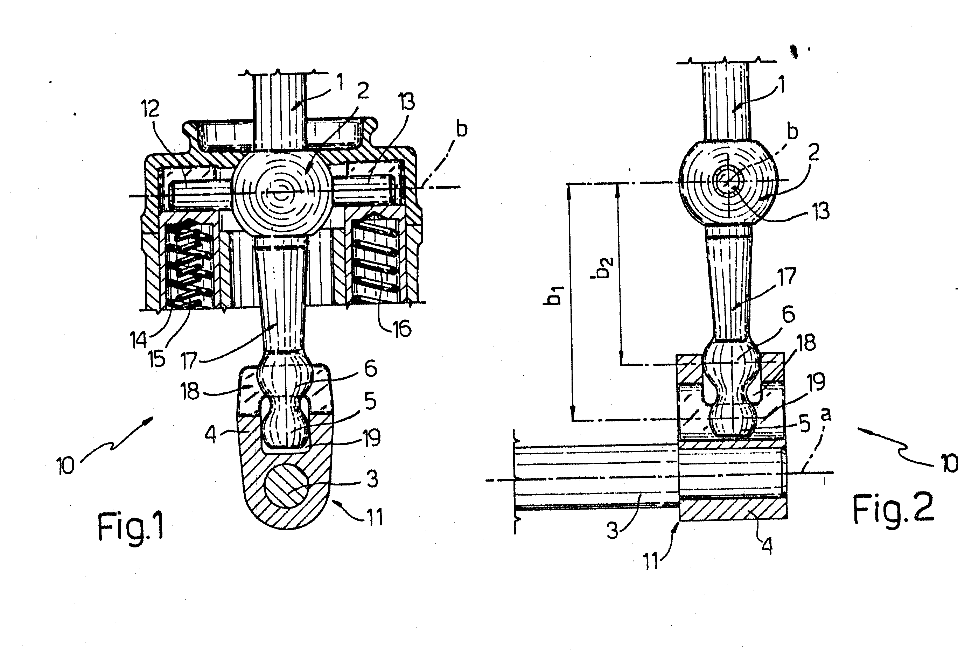

The operation of the device 10 takes place in a somewhat simple and intuitive manner. Figures 1 and 2 illustrate the rest (neutral) position, in which the lever 1 is maintained in a neutral rest position by means of the springs 14,15 and 16 acting on arms 12 and 13 of the ball joint 2.

Figure 3 illustrates the gear meshing control movement which involves the rotation of the rod 3 urged by the head

- 4 -

5 engaging the seat 19 of the element 4. It can be seen that, in this phase, the spherical enlargement 6 can move freely within the seat 18.

Figure 4 relates to the phase of gear selection, involving the translation of the rod 3 controlled by the lever 1 via the enlargement 6. Further, it is observed that, in this phase, the head 5 can move freely within the associated seat 19. From an examination of the characteristics of the device formed according to the principles of the present invention the advantages which it allows to be obtained are evident. Above all, the fork control rod being a single rod, the selection of the gears is simplified whilst it is no longer possible to perform erroneous manoeuvres in that the engagement of one gear automatically involves the exclusion of the other gear.

The length of the lever arm $b_2$ which is less than the arm $b_1$ allows the already existing differences in the forces required for the selection, and, respectively, engagement of the gears to be compensated. The driver must therefore exercise only an almost constant force both in the selection phase and in the engagement phase and this involves an improvement in the operating comfort.

It is to be remembered that the device in question is advantageously usable for controlling the selection and engagement of the gears in a gearbox with at least four gears disposed two by two in line. Finally, it is clear that the device 1 described above can be modified and varied without by this departing from the scope of the present invention.

(Dr. Ing. BOGGIO Luigi)

- 5 -

CLAIMS

1. A device (10) for the selection and control of the gears in a vehicle gearbox of the type in which a lever (1), operable by the driver, acts by means of a link (11) on gear selector forks, characterised by the fact that the link (11) is essentially constituted by a single fork-actuating rod (3); the said rod (3) being rotatably and slidably mounted in a longitudinal sense about its own axis ($a$) of symmetry and carrying radially a coupling element (4) cooperating with an arm (17) of the said lever (1) and from which it is able to receive forces in two perpendicular directions which cause the said rod (1) to perform movements of translation or rotation about its axis ($a$).

2. A device according to Claim 1, characterised by the fact that the said coupling element (4) has a first seat (18) and a second sliding seat (19) which receive one end of the said arm (17) and which extend along perpendicular directions with respect to one another respectively perpendicular and parallel to the said axis of symmetry ($a$) of the said rod (3).

3. A device according to Claim 2, characterised by the fact that the end of the said arm (17) has essentially a spherical enlargement (6) surmounted by a spherical head (5) respectively cooperating with the said first seat (18) and with the said second seat (19).

4. A device according to Claim 2 or Claim 3, characterised by the fact that the said first seat (18) is essentially constituted by a groove.

5. A device according to any of the preceding Claims from 2 to 4, characterised by the fact that the said second seat (19) is essentially constituted by a through hole formed parallel to the said axis (a) and partially communicating, in transverse sense, with the said first seat (18).

6. A device according to any of the preceding Claims from 3 to 5, characterised by the fact that the arm (17) carrying the said spherical enlargement (6) and the said head (5) constitutes an integral part of the said lever (1).

7. A device according to any of the preceding Claims from 3 to 6, characterised by the fact that the said spherical enlargement (6) and spherical head (5) are disposed in the longitudinal sense of the control lever (1) in such a way that the actuating force for rotation of the said rod (3) in the said gear selection phase is about equal to the actuating force for displacement of the rod (3) in the gear engaging phase.

(Dr. Ing. BOGGIO Luigi)

Fig.2

Fig.1

Fig.3

Fig.4

C1 49019